Europäisches Patentamt

European Patent Office

Office européen des brevets

(11) Publication number: 0 346 019
A1

# EUROPEAN PATENT APPLICATION

(21) Application number: 89305592.1

(51) Int. Cl.⁴: G03B 21/11

(22) Date of filing: 02.06.89

(30) Priority: 06.06.88 US 202371

(43) Date of publication of application:
13.12.89 Bulletin 89/50

(84) Designated Contracting States:
BE DE FR GB IT

(71) Applicant: MINNESOTA MINING AND
MANUFACTURING COMPANY
3M Center, P.O. Box 33427
St. Paul, Minnesota 55133(US)

(72) Inventor: Muehlhausen, Robert A. c/o
Minnesota Mining and
Manufacturing Company 2501 Hudson Road
St. Paul Minnesota 55144-1000(US)

(74) Representative: Baillie, Iain Cameron et al
c/o Ladas & Parry Isartorplatz 5
D-8000 München 2(DE)

(54) Film image reader/scanner apparatus.

(57) A film image reader/scanner apparatus providing
two capabilities, operable only at separate times
wherein one capability provides for the projection
onto a viewing screen (60) of a light image created
from a film image presented to the apparatus, with
the second capability providing for a line-by-line
scan of the light image that is directed to a linear
scan array (90) for the production of signals repre-
sentative of the light image.

FIG.1

## Film Image Reader/Scanner Apparatus

### Technical Field

The invention presented herein relates to an apparatus having two capabilities which are operable at separate times; one provides for the projection on a viewing screen of a light image created from a film image and the other provides for scanning of the light image for the creation of signals representative of the light image.

### Background Art

Apparatus having two capabilities, operable at separate times, wherein one of the capabilities provides for the projection of a light image created from a film image to a viewing screen are well known. The apparatus disclosed in U.S. Patents 3,988,064 to Sone et al; 4,367,033 to Watanabe; and 4,589,767 to Yanagi et al are representative of such apparatus. The other capability provided by such prior art apparatus is that of providing a latent image of the image carried on a film at a photosensitive medium presented on a rotating drum from which a print of the latent image can be made using various well known electrophotographic development process mechanisms.

Such prior art arrangements are desirable when an operator needs a print of the image being viewed at the time the operator is viewing the image on a viewing screen. If the print is actually wanted at another location, the print must be made and then physically taken to such location. Further, while the prior art apparatus enables the operator to observe an image carried by a film on the viewing screen, if a print of an observed image is desired at some later time, the imaged film must be retrieved and the image located. Further, the quality of the print obtained by directing the imaged film at the viewing screen to a photosensitive medium is limited by the quality of the image.

### Summary of the Invention

The invention presented herein provides an apparatus which has two capabilities which are operable at separate times, wherein one of the capabilities, as with the prior art apparatus, provides for the projection of an image carried by a film to a viewing screen. The second capability provides for presentment of the image carried on the film to a linear scan array on a line-by-line basis wherein the linear scan array encompasses the full line width of the image. The linear scan array is a type that is operative to produce signals representative of the image presented to it which can be digitized. An apparatus with such capabilities provides digital signals representative of the image that can be directed to a printer provided as a part of or adjacent to the apparatus or at a point remote from the apparatus to provide a print of the scanned image. Further, by providing the image in the form of digital signals, as indicated, it is possible to store the image in the form of such digital signals for recall at a later time for use in producing a print of the digitally stored image or for presentment of the digitally stored image on a CRT monitor or other visible image producing devices using a digital signal input.

In addition to the structure for the first capability providing for the projection onto a viewing screen of light image created from a film image, which is known in the prior art, the apparatus includes the mentioned linear scan array plus means positionable with respect to the light path provided for the image projection capability for progressive presentment of the light image to the linear scan array so the linear scan array receives the full dimension of the image along a line in one direction whereby the apparatus provides signals obtained from a line-by-line scan of the light image. The linear scan array can be provided by a charge coupled device (CCD) or photodiode array.

In one embodiment of the invention the means positionable with respect to the light path provided for the image projection capability for progressive presentment of the light image to the linear scan array includes a mirror operable for movement about an axis of rotation. Such a mirror can be provided by an oscillating or rotating mirror structure.

In another embodiment of the invention the means positionable with respect to the light path provided for the image projection capability for progressive presentment of the light image to the linear scan array includes a mirror that is movable away from the light path with the linear scan array being movable relative to the light image directed to the linear scan array.

### Brief Description of the Drawing

Other features, advantages and aspects of the invention presented herein will become readily apparent to those skilled in the art upon consideration of the following detailed description which is given in reference to the drawing wherein:

Figure 1 is a schematic showing of one embodiment of the invention; and

Figure 2 is a schematic showing of a second embodiment of the invention.

Detailed Description

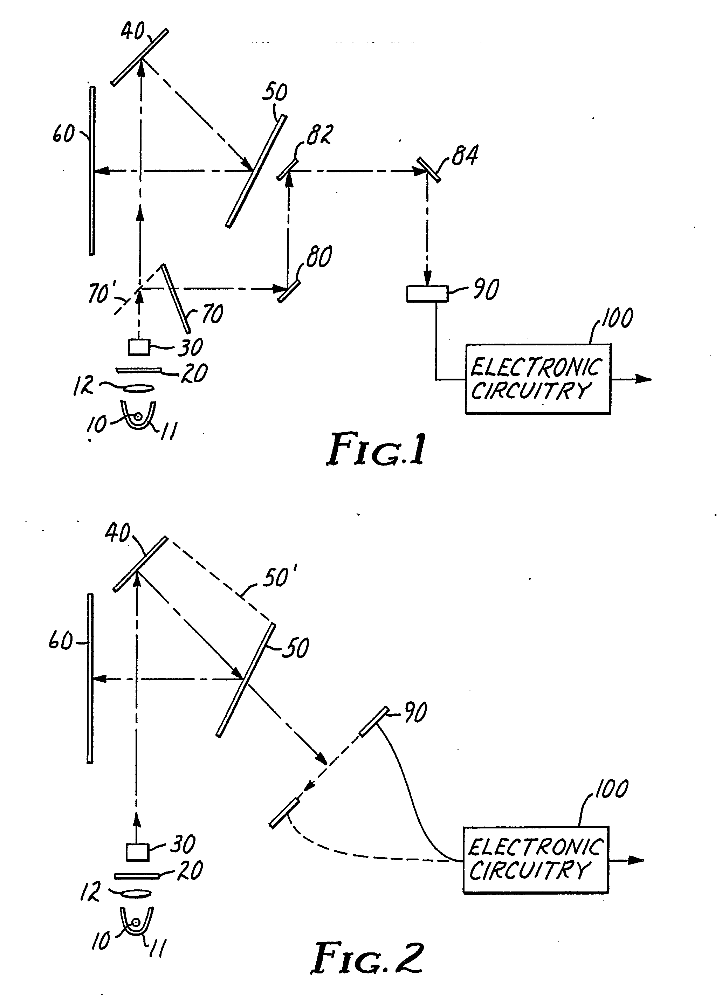

Referring to Figure 1 of the drawing, an apparatus embodying the invention presented herein is shown in schematic form. The apparatus includes a light source 10 which has its output directed by a reflector 11 and a condensing lens 12 to a film plane indicated by the line 20 at which an image carried on a film can be presented. One function of the apparatus allows the operator to view an image when an image carried by a film is presented to the apparatus. The image on the film is enlarged and is projected onto a viewing screen 60 that is a part of the apparatus. The film presented to the apparatus can take on various forms that are well known such as microfilm, microfiche and film aperture cards. In addition to the viewing screen 60, the apparatus includes an enlarging lens 30 plus two first surface mirrors 40 and 50 for folding the optical path before being presented to the viewing screen 60 which is of the type that permits the image to be viewed from the side opposite from the side to which the light image is directed. The light image provided by a film at the film plane 20 is enlarged by lens 30 for passage to the mirror 40 where it is then directed to mirror 50 for reflection to the viewing screen 60. The light path provided by the components described allows the operator to view the light image projected onto the viewing screen 60 when an image carrying film is presented at the film plane 20 and the light source 10 is energized.

The function of the apparatus described to this point is known and is incorporated in various film readers and film reader-printer apparatus that are currently available.

Additional components are provided in the apparatus of Figure 1 for carrying a second capability or function which provides for the production of signals based on the light image that is presented in a progressive line by line manner to a linear scan array 90 that is provided. The other additional components provided for this second function include first surface mirrors 70, 80, 82 and 84. Mirror 70 has two positions with the dotted line referenced by the numeral 70' showing the position to which it is moved when the second capability is to be provided. The other position for mirror 70 takes it out of the light path allowing the apparatus to be operated to provide the first reader or viewing capability that has been described. The mirror 70 is movable about an axis of rotation when in the position shown by dotted line 70' in Figure 1. The light image is progressively presented to the linear scan array 90 via the mirrors 80, 82 and 84 as the mirror 70 moves about its axis of rotation. The mirror 70 can be an oscillating or rotating mirror. As a rotating mirror it can take the form of a polygon mirror wherein a number of mirrors are positioned for rotation about its axis or it can be a single mirror or double-sided mirror, each mirror surface, when presented to the light image, serving to progressively present the light image to the linear scan array.

As with mirrors 40 and 50, mirrors 80, 82 and 84 merely serve to fold the light image path allowing the housing (not shown) for the apparatus to be compact in size. With mirror 70 at its 70' position, the light image is received from the enlarging lens 30 and is directed to mirror 80 where it is reflected for passage to mirror 82 and thence to mirror 84 where it is directed to the linear scan array 90. The block 100 represents the electronic circuitry connected to the array 90 to receive the output signals from the array when it is receiving the light image and provide such signals in digitized form to other apparatus, such as a printer, a signal storage device, computer or an electronic display device.

As can be seen from Figure 1, only the light source 10, reflector 11, lens 12, film plane 20 and enlarging lens 30 are components that are common to the two capabilities or functions provided by the apparatus. A second embodiment of the invention is shown in schematic form in Figure 2 wherein more common parts are used and fewer additional components are used to provide the two functions that have been described. As in the case of the apparatus of Figure 1, one of the components of the apparatus of Figure 2 has two positions, one position establishing the configuration for one of the two functions and the second position establishing the configuration for the other function.

Referring to Figure 2, the apparatus for providing the reader or viewing function has the same components as are employed by the apparatus of Figure 1, except that mirror 50 has two positions. The dotted line 50' shows the position for mirror 50 when the second function is provided for producing signals representative of the image. Thus, like the apparatus of Figure 1, the apparatus of Figure 2 has a light source 10, reflector 11, condensing lens 12, film plane 20, enlarging lens 30, viewing screen 60 and first surface mirrors 40 and 50 which operate to provide the first function as described for the apparatus of Figure 1.

While the apparatus of Figure 2 has a linear scan array 90, it differs from Figure 1 in that the array 90 is arranged for movement so that it traverses the light image to provide for the progressive presentment of the light image to the array 90 required for the second function. The light image for the second function is directed for interception by the array 90 during its movement by placing mirror 50 at its position indicated by the dotted line 50'. The light image from enlarging lens 30 thus passes to mirror 40 where it is then directed to the path traversed by the array 90. The apparatus of Figure 2 also employs the electronics 100 which connect to the array 90 for receiving the signals produced by the array 90 for digitizing the image detected by the array 90 on a line-by-line basis as the image is progressively presented to the array 90 and presenting such signals to other apparatus as indicated in connection with Figure 1.

The linear scan array 90 for the apparatus of Figures 1 and 2 can be provided by a charge coupled device (CCD) or photodiode array which are commercially available. The density of the elements determine the resolution of the digitized image along each line that is digitized. The resolution in the other direction is determined by the spacing provided between each digitized line which can be controlled by the rate at which the light image is progressively presented to the array 90.

The particulars of the foregoing description are provided merely for purposes of illustration and are subject to a considerable latitude of modification without departing from the novel teachings disclosed therein. Accordingly, the scope of this invention is intended to be limited only as defined in the appended claims, which should be accorded a breadth of interpretation consistent with this specification.

Claims

1. Apparatus having two capabilities operable at separate times wherein one of the capabilities is a light image projection capability that provides for projection to a viewing screen (60) via a light path of the light image created from an image carried on a film when presented to the apparatus, the apparatus including a linear scan array (90) operable to produce signals representative of a light image presented to it; and light directing means (70) positionable with respect to the light path provided for the light image projection capability for progressive presentment of the light image to said linear scan array so said linear scan array receives the full dimension of the light image along a line in one direction whereby the second capability of the apparatus provides for the creation of signals on a line-by-line basis of the image carried on a film when presented to the apparatus.

2. The apparatus according to claim 1 wherein said light directing means includes a mirror (70) operable for movement about an axis of rotation.

3. The apparatus according to claim 1 wherein said light directing means includes a mirror (50) that is movable to a position out of the light path when the apparatus provides the second capability to cause the light images to be directed to said linear scan array and said linear scan array is movable relative to the light image directed to said linear scan array when said mirror is moved out of the light path.

4. The apparatus according to claim 1 wherein said linear scan array (90) is provided by a series of linearly positioned charge coupled devices or photodiodes.

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 235 354 (FERRANTI LTD.) * page 1, paragraph 2 – page 2, paragraph 4; page 5, paragraph 3 – page 6, paragraph 1; claims 1-4,8; figures 3,6 * | 1,2,4 | G 03 B 21/11 |
| Y | | 3 | |
| Y,D | US-A-4 367 033 (Y. WATANABE) * abstract; figure 1; claims 1-3 * | 3 | |
| A | | 1,2,4 | |
| A | PATENT ABSTRACTS OF JAPAN vol. 8, no. 282 (P-323)(1719), 22 December 1984; & JP - A - 59 147335 (FUJI SHASHIN FILM K.K.) 23.08.1984 | 1-4 | |

TECHNICAL FIELDS SEARCHED (Int. Cl.4)

G 03 B

The present search report has been drawn up for all claims

| Place of search | Date of completion of the search | Examiner |
|---|---|---|
| BERLIN | 07-09-1989 | MANNTZ W W |

EPO FORM 1503 03.82 (P0401)